# EUROPEAN PATENT SPECIFICATION

(11) **EP 3 174 259 B1**
(45) Date of publication and mention of the grant of the patent: **01.08.2018**
(21) Application number: 15196069.7
(22) Date of filing: 24.11.2015
(51) Int. Cl.: H04L 27/26, H04W 56/00

(54) **PER SUBBAND BASED TIMING ADVANCE FOR MULTICARRIER SIGNALS**
PRO TEILBAND BASIERTE VORHALTEZEIT FÜR MEHRTRÄGERSIGNALE
PAR SOUS-BANDE SUR LA BASE DE L'AVANCE TEMPORELLE DE SIGNAUX D'UNE MULTIPORTEUSE

(43) Date of publication of application: 31.05.2017
(73) Proprietor: NTT DoCoMo, Inc., Tokyo (JP)
(72) Inventor: BAZZI, Jamal, 80687 Munich (DE); KUSUME, Katsutoshi, 80687 Munich (DE); WEITKEMPER, Petra, 80687 Munich (DE); IWAMURA, Mikio, 80687 Munich (DE)
(74) Representative: Hoffmann Eitle

(56) References cited:
- EP-A1- 2 281 377
- SCHAICH FRANK ET AL: "Waveform contenders for 5G - OFDM vs. FBMC vs", 2014 6TH INTERNATIONAL SYMPOSIUM ON COMMUNICATIONS, CONTROL AND SIGNAL PROCESSING (ISCCSP), IEEE, 21 May 2014 (2014-05-21), pages 457-460, XP032627152, DOI: 10.1109/ISCCSP.2014.6877912 [retrieved on 2014-08-13]
- SCHAICH FRANK ET AL: "Relaxed synchronization support of universal filtered multi-carrier including autonomous timing advance", 2014 11TH INTERNATIONAL SYMPOSIUM ON WIRELESS COMMUNICATIONS SYSTEMS (ISWCS), IEEE, 26 August 2014 (2014-08-26), pages 203-208, XP032666567, DOI: 10.1109/ISWCS.2014.6933347 [retrieved on 2014-10-21]
- MEDIATEK: "Multiple timing advance with carrier aggregation", 3GPP DRAFT; R2-112035 DISC_MULTIPLE TIMING ADVANCE WITH CA V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai; 20110411 - 20110415, 5 April 2011 (2011-04-05), XP050605743, [retrieved on 2011-04-05]
- JIALING LI ET AL: "A resource block based filtered OFDM scheme and performance comparison", ICT 2013, IEEE, 6 May 2013 (2013-05-06), pages 1-5, XP032777892, DOI: 10.1109/ICTEL.2013.6632084 [retrieved on 2013-10-14]

## Description

### FIELD OF THE INVENTION

The present invention relates to a method and apparatus for transmitting a multicarrier signal, wherein the signal is generated by applying filtering on a per subband basis, wherein a subband includes one or more subcarriers.

### BACKGROUND OF THE INVENTION

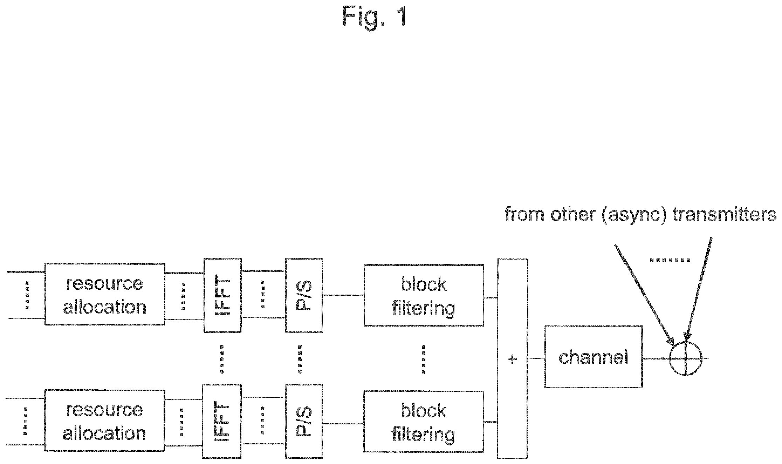

Figure 1 shows a block diagram with a schematic overview of the f-OFDM transmission scheme in a transmitter.

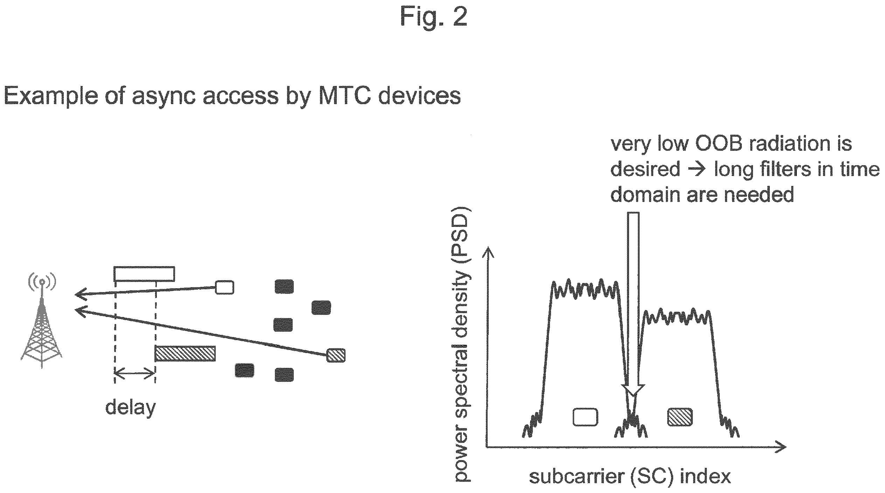

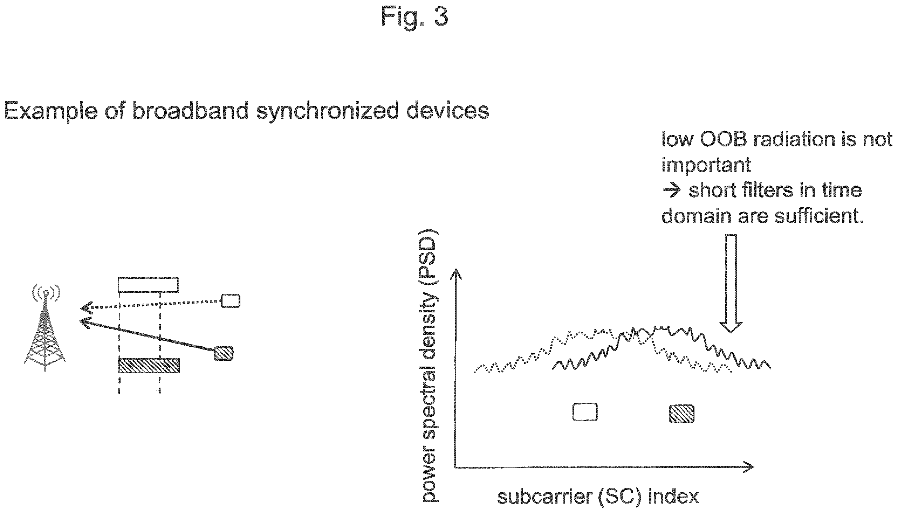

In general, filtering may significantly reduce out-of-band radiation resulting in less interference with transmissions in subbands of neighbouring users. Future transmission schemes are expected to support various services, besides broadband transmission for example also asynchronous access by machine-type communication (MTC) devices. Consequently, different filter lengths are desirable for different services. Figure 2 shows an example of asynchronous access by MTC devices where very low out-of-band (OOB) radiation is desirable and thus long filters in the time domain are necessary. In the scenario of Figure 2, transmissions occur from different MTC devices (shaded and clear) to a base station. Figure 3 shows another example with transmissions of broadband synchronous devices where low OOB radiation is less important than in the scenario of Figure 2 and thus short filters in the time domain are sufficient to achieve acceptable levels of OOB radiation. In the scenario of Figure 3, transmissions occur from different UEs (shaded and clear) to a base station.

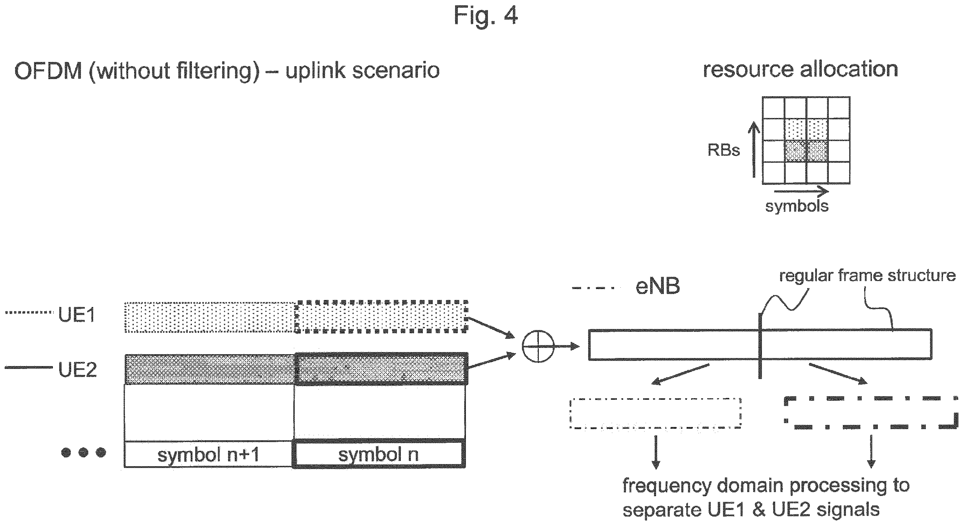

Cyclic prefix (CP)-OFDM shows desirable properties in a multiuser scenario as long as time domain synchronization is guaranteed through the timing advance technique. The timing advance technique in LTE guarantees that the different transmitted signals from various transmitters or UEs arrive at the same time at the receiver. Figure 4 also shows the regular frame structure at the receiver: it is easy at the receiver side to split the received signal into different symbols only once and to perform frequency domain processing to recover the signals of different UEs, UE1, and UE2 in the Figure 4. The eNB, and after estimating the transmission timing of the UE, transmits a Random Access Response (RAR) which consists of timing advance command, based on that UE adjusts its transmit timing. Such adjustments of the transmit timings of the different UE is made such that all the transmitted signals arrive at the same time the eNB as depicted in Figure 4. This approach to adjust the timing is also referred to as "conventional timing advance" in the following. Figure 4 also shows the resource allocation of different UEs, UE1 and UE2, wherein the symbols for different UEs are allocated in alignment with the resource grid, e.g. according to LTE.

Since all the transmitted signals arrive at the same time at the eNB and after they are combined together, the receiver processing at the eNB is then very simple. One frequency domain processing would be needed independent of the number transmitted/ combined signals. The signals of the different UEs could be easily separated and demodulated.

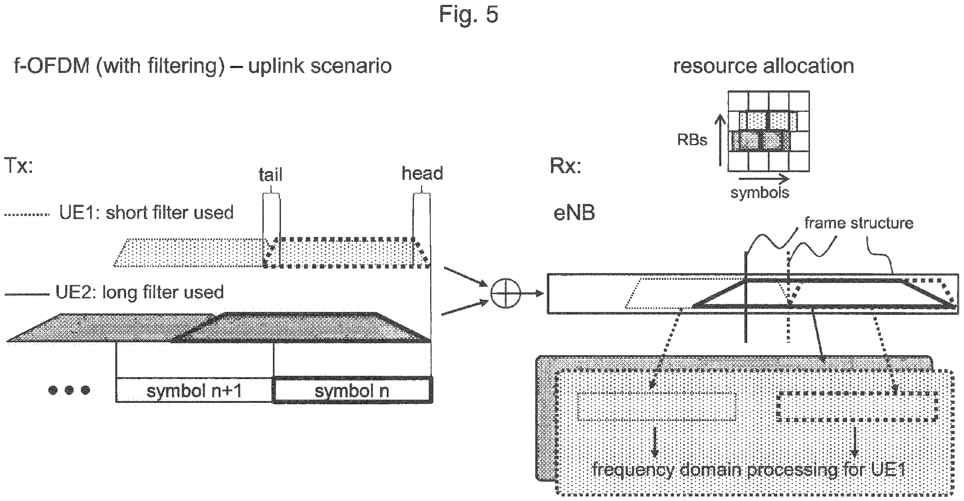

In the case of f-OFDM and with the additional filtering applied in the time domain, filter tails and heads are introduced to the transmitted time domain signals as depicted in Figure 5 with the sloppy edges of the signal of UE1 (dotted graph) and the signal of UE2 (continuous graph). Figure 5 shows that the regular frame structure at the receiver is violated when using filters with different lengths. Thus, the receiver needs to segment and process the received signal multiple times for detecting signals filtered by different filter lengths, which leads to increased processing complexity and effort at the receiver side. Figure 5 also shows the resource allocation of different UEs, UE1 and UE2, wherein the symbols for different UEs are not in alignment with the resource grid.

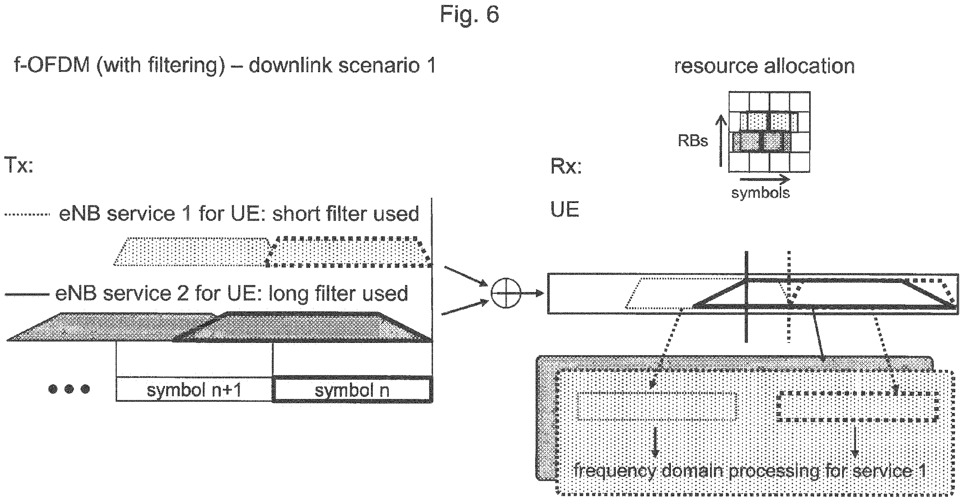

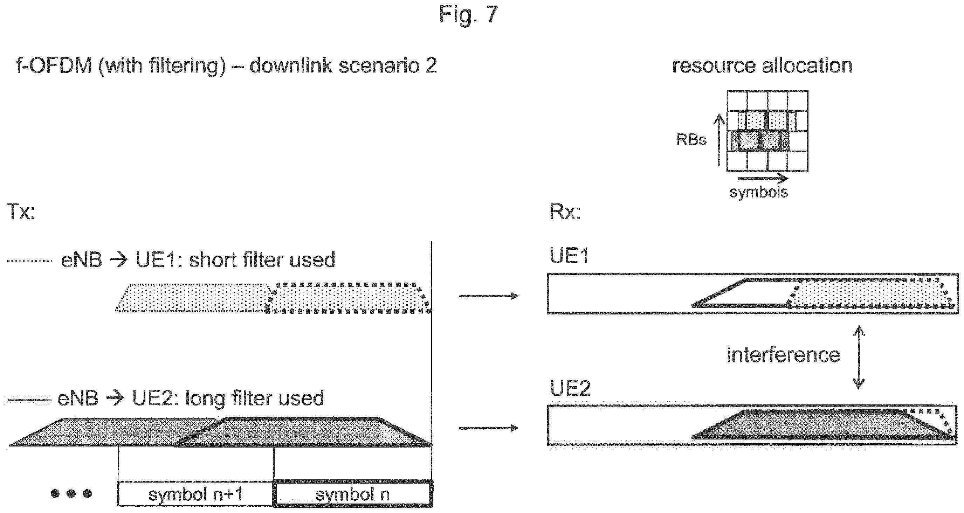

In the case of f-OFDM, when different UEs use different filters with different filter lengths, as shown in the scenario in Figure 5, the resulting time domain signals will have different lengths even if the transmitted number of OFDM symbols is the same. This difference is due to the different lengths of the filter heads and tails at the beginning and the end of the time domain signal. The different lengths of the time domain signals lead to the problem that signal processing at the receiver side is more complex than in the transmission scheme according to CP-OFDM shown in Figure 4. So far, the discussion has focused on the uplink scenario of Figure 5. However, the above described problem could similarly also occur in downlink scenarios that are for example illustrated in Figures 6 and 7.

Figure 6 shows a first downlink scenario where the above problem could be relevant. In the case of simultaneous downlink transmissions for different services targeting the same UE, the same problem could occur if these transmissions use different filter lengths. One could, for example, think of different Quality of Service (QoS) requirements for the different services (bearers), e.g. service 1 and service 2, which could require the use of different filter lengths. Since these different transmissions will arrive at the same time at the UE, the centres of the symbol slots will not be aligned anymore and the regular frame structure will be violated and more complex receiver processing at the UE side would be needed to detect the different signals.

In Figure 7 another downlink scenario is shown where the above problem could be relevant. In the case of different downlink transmissions for different UEs, the received signals at the different UEs interfere with each other since the filtered signals are not aligned in the centre of symbol slot. This interference is due to the timing misalignment between the actual symbol slots.

It is thus an objective of the present invention to design a transmission scheme that addresses the above problem and enables simple processing at the receiver side.

Schaich Frank et al.: "Waveform contenders for 5G - OFDM vs. FBMC VS", 2014 6TH INTERNATIONAL SYMPOSIUM ON COMMUNICATIONS, CONTROL AND SIGNAL PROCESSING (ISCCSP), IEEE, 21 May 2014 (2014-05-21), pages 457-460 presents a waveform design of 4G (based on OFDM) and motivates the need for a redesign for 5G. The new waveform design is called Universal Filtered Multi-Carrier (UFMC) and collects the advantages that FBMC is promising while avoiding its drawbacks. In contrast to FBMC, UFMC applies a filtering functionality per sub-band instead of per subcarrier.

Schaich Frank et al.: "Relaxed synchronization support of universal filtered multi-carrier including autonomous timing advance", 11TH INTERNATIONAL SYMPOSIUM ON WIRELESS COMMUNICATIONS SYSTEMS (ISWCS), IEEE, 26 August 2014 pages 203-208 presents that 5G wireless systems may benefit by waveforms supporting relaxed synchronization, as this enables reduced energy consumption, better support of low-end devices and reduction of signaling overhead. Schaich et al. evaluate UFMC, also known as UF-OFDM (universal filtered OFDM), with respect to its performance in scenarios with relaxed synchronization. Both carrier frequency offset, e.g. due to low-cost oscillators used in low-end devices, and relative fractional delay, e.g. due to the absence of an energy consuming closed-loop ranging mechanism, are considered for comparison. Furthermore, a concept called autonomous timing advance (ATA) is introduced for improving the overall system performance. With ATA the presented system can operate purely based on open-loop synchronization. For comparing UFMC with CP-OFDM, the mean squared error (MSE) in the receiver after frequency conversion is compared. With applying a limit regarding the tolerable amount of distortion, the supported link distance for a system applying either UFMC or CP-OFDM can be calculated for LTE-like settings.

EP 2281377 A1 presents a receiver that receives and front-end processes a plurality of component carrier signals, each carrier spaced apart in frequency. Thereby, the digitized, baseband component carrier signals are inspected to determine estimates of timing offsets between the carriers, wherein a control unit selects a first component carrier signal having data scheduled to the receiver. If data is scheduled to the receiver on other component carrier signals, the control unit generates timing and frequency offset adjustment control signals to time-and frequency-align each other component carrier signal having relevant data, to the first component carrier signal. All the relevant component carrier signals are then combined, and a single OFDM symbol, spanning all the relevant component carriers, is presented to an FFT for symbol detection.

"Multiple timing advance with carrier aggregation", 3GPP DRAFT; R2-112035 DISC_MULTIPLE TIMING ADVANCE WITH CA V4, 3RD GENERATION PARTNERSHIP PROJECT (3GPP), vol. RAN WG2, 5 April 2011 discusses different ion options for supporting multiple timing advance.

JIALING LI ET AL: "A resource block based filtered OFDM scheme and performance comparison", ICT 2013, IEEE, 6 May 2013 (2013-05-06), pages 1-5, describes a technique, called resource block (RB) filtered OFDM (RB-F-OFDM), which divides the available spectrum fragments into chunks of contiguous subcarriers, referred to RBs, and generates and filters the signal transmitted on each RB individually. This approach has the advantage of being modular and scalable since the same transmit and receive modules are used for all RBs. The performance of OFDM, filtered OFDM, RB F-OFDM, and OFDM-OQAM is compared and simulations are performed under various adjacent channel interference (ACI) conditions. Simulation results show that OFDM-OQAM offers the best performance under channels with moderate delay spread and ACI; however, it has the undesired high latency and its signal is not backwards compatible to legacy OFDM receivers. The performance of RB F-OFDM is similar to filtered OFDM while adding support for non-contiguous spectrum, making it a viable solution for dynamic spectrum sharing systems.

### SUMMARY OF THE INVENTION

According to one embodiment, a method for transmitting a multicarrier signal is provided, wherein said signal is generated by applying filtering on a per subband basis, wherein said subband includes one or more subcarriers, the method being characterized in that a transmission timing is adjusted with respect to a reference timing by a correction amount, wherein said correction amount depends on an impulse response of the applied filtering.

This has the effect and advantage that the timing at the receiver side is adjusted correspondingly, such that the processing at the receiver side may be simplified.

According to another embodiment, the correction amount depends on a length of the impulse response of the applied filtering.

This has the effect and advantage that the correction amount of the timing can be different for transmissions with different filters. Specifically, the correction amount may be larger for filters with a long impulse response, i.e. long tails and heads of the transmitted time domain signal, than for filters with a short impulse response, i.e. where the transmitted time domain signal has a short tail and head at each edge respectively.

According to another embodiment, the correction amount is chosen such that a filtered signal of a transmission is aligned to a centre of a transmission slot containing one or more symbols, wherein start and end of said transmission slot are determined according to the reference timing.

This has the effect and advantage that the alignment of the signals does not have to be established explicitly through further signal processing at the receiver, so that the processing at the receiver side can be simplified. The regular frame structure at the receiver can be kept, so that receiver side processing can be made as simple as in OFDM, i.e. only one-time processing is necessary to separate signals for UE1 and UE2.

According to another embodiment, the correction amount is half of the length of the impulse response of the applied filtering.

This has the effect and advantage that the correction amount may be simply determined from the impulse response time at the transmitter side, e.g. for signals with symmetric tails and heads of the transmitted time domain signals, so that the alignment of received time domain signals is achieved so that the processing at the receiver side can be simplified.

According to another embodiment, the multicarrier signal is formed by filtered orthogonal frequency-division multiplexing, f-OFDM, modulation.

This has the effect and advantage that the processing at the receiver side can be simplified for transmissions according to the f-OFDM transmission scheme.

According to another embodiment, there is provided a method applying transform precoding to symbols before they are mapped onto subcarriers of a multicarrier signal.

This has the effect and advantage that the transmission signals in the time domain result in low peak to average power ratio, PAPR, which is a property that improves the usage of a power amplifier, so that consequently coverage is improved.

According to another embodiment, there is provided a method applying a discrete Fourier transform as transform precoding to symbols before they are mapped onto subcarriers.

This has the effect and advantage that it leads to a straightforward extension of existing single carrier frequency division multiplexing, SC-FDMA, modulation with additional filtering on a per subband basis and the PAPR property can be improved. According to another embodiment, the multicarrier signal is formed by filter bank multicarrier, FBMC, modulation.

This has the effect and advantage that the processing at the receiver side can be simplified for transmissions according to the FBMC transmission scheme.

According to another embodiment, the reference timing is determined based on a predefined pilot or synchronization sequences.

This has the effect and advantage that the reference timing can be determined at the transmitter according to existing synchronization mechanisms, thus simplifying the integration of the new transmission method of adding a correction amount to the signal timing into existing transmission and signalling schemes.

According to another embodiment, the transmission occurs from a first device to a second device and the reference timing is dependent on a timing advance value, wherein the timing advance value is signalled from the second device to the first device.

This has the effect and advantage that very precise reference timing can be a made available at the transmitter so that the correction amount of timing a transmission can be very precise, thus leading to a lower failure rates.

According to another embodiment, the signalling of the timing advance value is made by random access response or by MAC signalling which includes a timing advance command.

This has the effect and advantage that the timing advance valuecan be effectively determined by the transmitter exploiting existing signalling mechanisms, thus simplifying the design of the transmission method and facilitating the integration of the new transmission method of adding a correction amount to the signal timing into existing transmission and signalling schemes.

According to another embodiment, the reference timing or said timing advance value is dependent on a propagation delay.

This has the effect and advantage that the reference timing or the timing advance value is determined based on the channel propagation delay similar to the conventional timing advance technique in LTE.

According to one embodiment, there is provided a transmission apparatus for transmitting a multicarrier signal, comprising a module for generating said signal by applying filtering on a per subband basis wherein each subband includes one or more subcarriers, wherein the module is further adapted to adjust the transmission timing with respect to a reference timing by a correction amount, wherein said correction amount depends on an impulse response of the applied filtering.

According to another embodiment, a transmission apparatus is provided, which is adapted to carry out the transmission method as described above.

The effects and advantages achieved by the embodiments of the apparatus correspond to the effects and advantages of the embodiments of the method which have been described in detail above.

### DESCRIPTION OF THE DRAWINGS

Figure 1 shows a block diagram with a schematic overview of the f-OFDM transmission scheme in a transmitter.
Figure 2 shows an example scenario of asynchronous accesses by MTC devices.
Figure 3 shows an example scenario of broadband synchronized accesses by multiple devices.
Figure 4 shows a transmission and reception scheme according to CP-OFDM with timing advance.
Figure 5 shows a transmission and reception scheme according to f-OFDM in an uplink scenario with conventional timing advance.
Figure 6 shows a transmission and reception scheme according to f-OFDM in a first downlink scenario with one UE using multiple services provided by an eNB with conventional timing advance.
Figure 7 shows a transmission and reception scheme according to f-OFDM in a second downlink scenario with transmissions from the eNB to multiple UEs with conventional timing advance.
Figure 8 shows a block diagram with a schematic overview of an f-OFDM transmission scheme wherein a timing advance is introduced according to the present invention.
Figure 9 shows a transmission and reception scheme according to f-OFDM with transmissions with timing advance introduced by the transmitter according to the present invention.
Figure 10 shows a block diagram with a schematic overview of an f-OFDM transmission scheme with additional transform precoding before resource allocation wherein a timing advance is introduced according to the present invention.

### DETAILED DESCRIPTION

At first, some terms used in the description will be defined in the following list of abbreviations.
- CP: cyclic prefix
- eNB: eNodeB
- FBMC: filter bank multicarrier (transmission scheme)
- LTE: Long Term Evolution (mobile telecommunication standard)
- MTC: machine-type communications
- OFDM: orthogonal frequency division multiplex (transmission scheme)
- OOB: out-of-band
- PAPR: peak-to-average power ratio
- PSD: power spectral density
- QoS: quality of service
- RAR: random access response
- SC-FDMA: single-carrier frequency division multiplexing
- UE: user equipment

By applying to the above problem the timing advance technique similar as in LTE, the different transmitted signals from the different UEs will still arrive at the eNB at the same time. However, the centres of the symbol slots will not be aligned anymore and the regular frame structure will be violated. In this case and in order to detect and demodulate the signals of the different UEs, the receiver processing becomes more complex. The receiver needs to segment and perform the frequency domain processing multiple times to detect the signals which were filtered by different filters with different lengths.

The present invention according to one embodiment provides a method for transmitting a multicarrier signal. The signal is generated by applying filtering on a per subband basis such that a resource space is divided into a plurality of subbands, wherein each of the subbands includes one or more subcarriers. The method adjusts the transmission timing with respect to a reference timing by a correction amount, wherein the correction amount depends on the impulse response of the applied filtering.

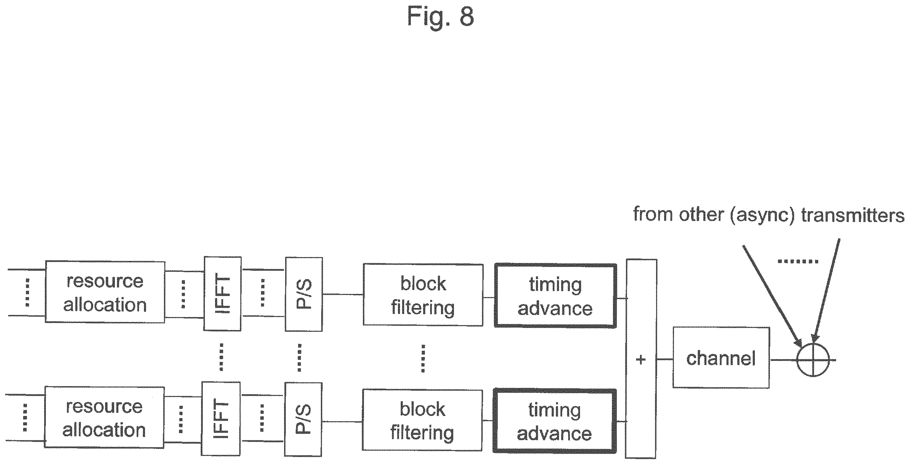

Figure 8 shows a block diagram with a schematic overview of an f-OFDM transmission scheme wherein a timing advance is introduced at the transmitter according to an embodiment of the present invention.

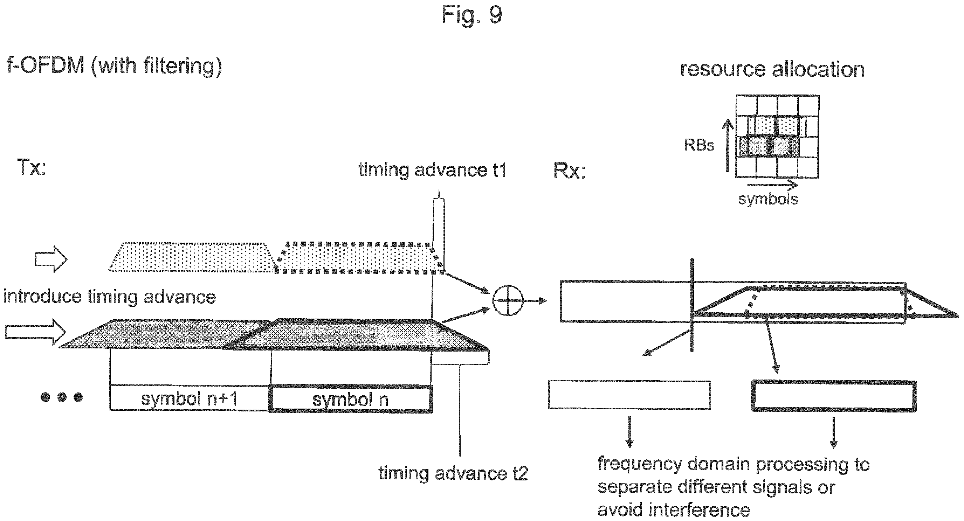

The new proposed solution, which will be described and further embodiments in more detail below, guarantees that the regular frame structure will be kept, in particular at the receiver side, and the symbol slots of the different UEs will be aligned in the centre by taking the filter length into consideration in the timing advance technique as depicted in Figure 9. Specifically, the transmission of the first signal (upper signal in Figure 9) accounts for a short timing advance t1 and the transmission of the second signal (lower signal in Figure 9) accounts for a long timing advance t2. The timing advances are chose such that the signals, when received by a received, are aligned at the center of the symbol slot (right part of Figure 9), so that receiver side processing is simplified.

By taking the filter length into consideration in the timing advance technique, it is enabled that the transmitted signals of the different UEs arrive at different time intervals at the eNB. In this way, it can be guaranteed that the centres of symbol slots are aligned. The receiver processing in this case can be kept as simple as in the case of CP-OFDM in LTE (see Figure 4). Only one time frequency domain processing would be needed to separate the signals of the different UEs.

Similarly for the first downlink scenario shown in Figure 6, the proposed solution guarantees that the centres of symbol slots are aligned and the receiver processing at the UE is as simple as in LTE.

In addition, this proposed solution will prevent the interference between different UEs in the second downlink scenario shown in Figure 7 since the centres of symbol slots are aligned and no timing misalignment is present between them.

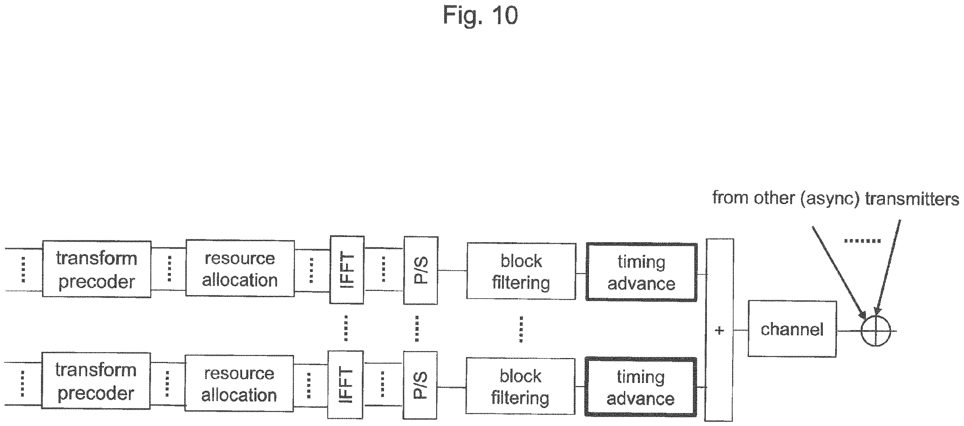

The proposed solution is also applicable to a transmission scheme known as single-carrier FDMA, SC-FDMA, which is used e.g. as an LTE uplink transmission scheme. SC-FDMA, which is also known as DFT spread OFDM, is similar to OFDM where an additional DFT spreading in a smaller dimension is applied before OFDM modulation at a transmitter and the respective IDFT after the OFDM demodulation at the receiver. In this transmission scheme, similar to OFDM, transmission occurs using a regular frame structure. Consequently, the principles of the present invention are also applicable to SC-FDMA. Figure 10 shows a block diagram with a schematic overview of an f-OFDM transmission scheme with additional transform precoding that achieves said DFT spreading at the transmitter. A transform precoder is applied before the resource allocation in the frequency domain, i.e. mapping on subcarriers, such that the PAPR property of the time domain transmission signals improves.

The above described embodiments have at least the following advantages: The benefits of the invention is to enable keeping a regular frame structure in the current standards by proper transmission alignment at the transmitter sides which in turn would enable simple receiver processing, similar to the receiver-side processing in LTE, and prevent inter-user interference in the downlink.

It will be readily apparent to the skilled person that the method, steps and their variants described in connection with embodiments of the present invention may be implemented in hardware, in software, or as a combination of both. In particular it will be appreciated that the embodiments of the invention may be implemented by a computer program or computer programs running on a computer or being executed by a microprocessor. Any apparatus implementing the invention may in particular take the form of a computing device acting as a communicating network entity.

## Claims

1. A method for transmitting a multicarrier signal,
wherein said signal is generated by applying filtering on a per subband basis, wherein said subband includes one or more subcarriers,
the method being **characterized in that** a transmission timing is adjusted with respect to a reference timing by a correction amount,
wherein said correction amount depends on an impulse response of the applied filtering, and
wherein said correction amount is chosen such that a filtered signal of a transmission is aligned to a centre of a transmission slot containing one or more symbols, wherein start and end of said transmission slot are determined according to the reference timing.

2. The transmission method of claim 1, wherein said correction amount depends on a length of the impulse response of the applied filtering.

3. The transmission method of one of the previous claims, wherein said correction amount is half of the length of the impulse response of the applied filtering.

4. The transmission method according to one of the previous claims, wherein the multicarrier signal is formed by filtered orthogonal frequency-division multiplexing, f-OFDM, modulation.

5. The transmission method of claim 4,
wherein transform precoding is applied to symbols before they are mapped onto subcarriers.

6. The transmission method of claim 5,
wherein said transform precoding is a discrete Fourier transform.

7. The transmission method according to one of claims 1 to 3, wherein the multicarrier signal is formed by filter bank multicarrier, FBMC, modulation.

8. The transmission method of one of the previous claims wherein said reference timing is determined based on a predefined pilot or synchronization sequences.

9. The transmission method according to claim 8,
wherein the transmission occurs from a first device to a second device,
wherein said reference timing is dependent on a timing advance value, said timing advance value being signalled from the second device to the first device.

10. The transmission method according to claim 9, wherein the signalling of the timing advance value is made by random access response or by MAC signalling which includes a timing advance command.

11. The transmission method of one of the previous claims wherein said reference timing or said timing advance value is dependent on a propagation delay.

12. A transmission apparatus for transmitting a multicarrier signal,
wherein said signal is generated by applying filtering on a per subband basis, wherein said subband includes one or more subcarriers,
the apparatus being **characterized by** a module for adjusting a transmission timing with respect to a reference timing by a correction amount, wherein said correction amount depends on an impulse response of the applied filtering, and
wherein said correction amount is chosen such that a filtered signal of a transmission is aligned to a centre of a transmission slot containing one or more symbols, wherein start and end of said transmission slot are determined according to the reference timing.

13. The transmission apparatus according to claim 12, further comprising a module that is adapted to carry out the transmission method according to one of claims 2 to 11.

## Patentansprüche

1. Verfahren zur Übertragung eines Mehrträgersignals,
wobei das Signal durch Anwendung einer Filterung pro Teilband erzeugt wird, wobei das Teilband einen oder mehrere Unterträger enthält,
wobei das Verfahren **dadurch gekennzeichnet ist, dass** ein Sendezeitpunkt in Bezug auf einen Referenzzeitpunkt um einen Korrekturbetrag angepasst wird,
wobei der Korrekturbetrag von einer Impulsantwort der angewandten Filterung abhängt, und
wobei der Korrekturbetrag so gewählt ist, dass ein gefiltertes Signal einer Übertragung auf eine Mitte eines Übertragungsschlitzes ausgerichtet ist, der ein oder mehrere Symbole enthält, wobei Anfang und Ende des Übertragungsschlitzes gemäß dem Referenztiming bestimmt werden.

2. Übertragungsverfahren nach Anspruch 1, wobei der Korrekturbetrag von einer Länge der Impulsantwort der angewandten Filterung abhängt.

3. Übertragungsverfahren eines der vorhergehenden Ansprüche, wobei der Korrekturbetrag die Hälfte der Länge der Impulsantwort der angewandten Filterung beträgt.

4. Übertragungsverfahren nach einem der vorstehenden Ansprüche, wobei das Mehrträgersignal durch gefiltertes orthogonales Frequenzmultiplexing, f-OFDM, Modulation gebildet wird.

5. Das Übertragungsverfahren nach Anspruch 4,
wobei die Transformationsvorcodierung auf Symbole angewendet wird, bevor sie auf Unterträger abgebildet werden.

6. Das Übertragungsverfahren nach Anspruch 5,
wobei die Transformationsvorcodierung eine diskrete FourierTransformation ist.

7. Übertragungsverfahren nach einem der Ansprüche 1 bis 3, wobei das Mehrträgersignal durch Filterbank-Mehrträger, FBMC, Modulation gebildet wird.

8. Übertragungsverfahren für einen der vorhergehenden Ansprüche, wobei das Referenztiming auf der Grundlage einer vordefinierten Pilot- oder Synchronisationssequenz bestimmt wird.

9. Das Übertragungsverfahren nach Anspruch 8,
wobei die Übertragung von einer ersten Vorrichtung zu einer zweiten Vorrichtung erfolgt,
wobei die Referenzzeit von einem Zeitvorschubwert abhängig ist, wobei der Zeitvorschubwert von der zweiten Vorrichtung an die erste Vorrichtung signalisiert wird.

10. Übertragungsverfahren nach Anspruch 9, wobei die Signalisierung des Zeitvorschubwertes durch Zufallszugriffsantwort oder durch MAC-Signalisierung erfolgt, die einen Zeitvorschubbefehl enthält.

11. Übertragungsverfahren für einen der vorhergehenden Ansprüche, wobei der Referenzzeitpunkt oder der Zeitvorschubwert von einer Ausbreitungsverzögerung abhängig ist.

12. Übertragungsgerät zur Übertragung eines Mehrträgersignals,
wobei das Signal durch Anwendung einer Filterung pro Teilband erzeugt wird, wobei das Teilband einen oder mehrere Unterträger enthält,
wobei die Vorrichtung **gekennzeichnet ist durch** ein Modul zum Einstellen eines Übertragungstimings in Bezug auf ein Referenztiming um einen Korrekturbetrag, wobei der Korrekturbetrag von einer Impulsantwort der angewandten Filterung abhängt, und
wobei der Korrekturbetrag so gewählt ist, dass ein gefiltertes Signal einer Übertragung auf eine Mitte eines Übertragungsschlitzes ausgerichtet ist, der ein oder mehrere Symbole enthält, wobei Anfang und Ende des Übertragungsschlitzes gemäß dem Referenztiming bestimmt werden.

13. Übertragungsvorrichtung nach Anspruch 12, ferner mit einem Modul, das geeignet ist, das Übertragungsverfahren nach einem der Ansprüche 2 bis 11 durchzuführen.

## Revendications

1. Procédé pour transmettre un signal de multi-porteuse,
dans lequel ledit signal est généré par application d'un filtrage par sous-bande, dans lequel ladite sous-bande inclut une ou plusieurs sous-porteuses,
le procédé étant **caractérisé en ce qu'**un minutage de transmission est ajusté par rapport à un minutage de référence d'une quantité de correction,
dans lequel ladite quantité de correction dépend d'une réponse d'impulsion du filtrage appliqué, et
dans lequel ladite quantité de correction est choisie de sorte qu'un signal filtré d'une transmission soit aligné avec un centre d'un créneau de transmission contenant un ou plusieurs symboles, dans lequel un début et une fin dudit créneau de transmission sont déterminés en fonction du minutage de référence.

2. Procédé de transmission selon la revendication 1, dans lequel ladite quantité de correction dépend d'une longueur de la réponse d'impulsion du filtrage appliqué.

3. Procédé de transmission selon l'une des revendications précédentes, dans lequel ladite quantité de correction représente la moitié' de la longueur de la réponse d'impulsion du filtrage appliqué.

4. Procédé de transmission selon l'une des revendications précédentes, dans lequel le signal de multi-porteuse est formé par modulation à multiplexage par répartition orthogonale de la fréquence filtré, f-OFDM.

5. Procédé de transmission selon la revendication 4,
dans lequel un précodage par transformation est appliqué aux symboles avant qu'ils ne soient mappés sur des sous-porteuses.

6. Procédé de transmission selon la revendication 5,
dans lequel ledit précodage par transformation est une transformée de Fourier discrète.

7. Procédé de transmission selon l'une des revendications 1 à 3, dans lequel le signal de multi-porteuse est formé par modulation de multi-porteuse à banc de filtres, FBMC.

8. Procédé de transmission selon l'une des revendications précédentes, dans lequel ledit minutage de référence est déterminé sur la base d'un pilote prédéfini ou de séquences de synchronisation.

9. Procédé de transmission selon la revendication 8,
dans lequel la transmission se produit d'un premier dispositif à un second dispositif,
dans lequel ledit minutage de référence dépend d'une valeur d'avance de minutage, ladite valeur d'avance de minutage étant signalée du second dispositif au premier dispositif.

10. Procédé de transmission selon la revendication 9, dans lequel la signalisation de la valeur d'avance de minutage est faite par une réponse d'accès direct ou par signalisation MAC qui inclut une commande d'avance de minutage.

11. Procédé de transmission selon l'une des revendications précédentes, dans lequel ledit minutage de référence ou ladite valeur d'avance de minutage dépend d'un retard de propagation.

12. Appareil de transmission pour transmettre un signal de multi-porteuse,
dans lequel ledit signal est généré par application d'un filtrage par sous-bande, dans lequel ladite sous-bande inclut une ou plusieurs sous-porteuses,
l'appareil étant **caractérisé par** un module pour ajuster un minutage de transmission par rapport à un minutage de référence d'une quantité de correction, dans lequel ladite quantité de correction dépend d'une réponse d'impulsion du filtrage appliqué, et
dans lequel ladite quantité de correction est choisie de sorte qu'un signal filtré d'une transmission soit aligné avec un centre d'un créneau de transmission contenant un ou plusieurs symboles, dans lequel un début et une fin dudit créneau de transmission sont déterminés en fonction du minutage de référence.

13. Appareil de transmission selon la revendication 12, comprenant en outre un module qui est adapté pour mettre en oeuvre le procédé de transmission selon l'une des revendications 2 à 11.
